# EUROPEAN PATENT SPECIFICATION

(11) **EP 2 809 022 B1**
(45) Date of publication and mention of the grant of the patent: **30.09.2015**
(21) Application number: 13169348.3
(22) Date of filing: 27.05.2013
(51) Int. Cl.: H04K 3/00, H04W 24/08

(54) **Detection of Intentional Radio Jamming**
Erkennung von beabsichtigter Funkstörung
Détection de brouillage radio intentionnel

(43) Date of publication of application: 03.12.2014
(73) Proprietor: Nokia Solutions and Networks Oy, 02610 Espoo (FI)
(72) Inventor: Niemelä, Kari Juhani, 90650 Oulu (FI)
(74) Representative: Borgström, Markus

(56) References cited:
- EP-A2- 1 501 329
- WO-A1-2007/019814
- GB-A- 2 435 987
- US-A1- 2011 151 768

## Description

### Field

The invention relates to the field of radio communications and, particularly, to detection of intentional interference towards a cellular communication system.

### Background

Intentional radio interference also known as radio jamming is a potential indication of illegal activity, e.g. burglary or violence. Radio communications may be prevented in order to disable any type of alarming. Some radio devices are capable of detecting when they are being jammed but their communications capability to inform about the situation may be disabled by the jamming.

GB 2 435 987 discloses a mobile communication system includes an infrastructure including at least a first base transceiver station and a plurality of mobile stations, wherein each of the mobile stations is operable to detect interference by jamming to a signal sent on a downlink channel by the first base transceiver station and, when it determines that such interference exists, to send a notification message to the infrastructure.

EP 1 501 329 discloses a wireless communication system which comprises at least one wireless serving communication unit, e.g. base transceiver or transceiver station, serving a plurality of remote units with a communication resource. The at least one wireless serving communication unit detects non-availability of an one or more inbound communication resource(s) owing to interference or jamming and transmits a broadcast message on an outbound communication resource indicating a non-availability of the one or more inbound communication resource(s). Thus, by using a broadcast message of an uplink channel's non-availability, the impact of a third party transmitting a jamming /interfering signal to interfere with inbound signals to the serving unit is reduced.

### Brief description

According to an aspect of the invention, there is provided a method as specified in claim 1.

According to an aspect of the invention, there is provided an apparatus as specified in claim 14.

According to an aspect of the invention, there is provided a computer program product as specified in claim 15.

In an embodiment, there is provided an apparatus, comprising: at least one processor and at least one memory including a computer program code, wherein the at least one memory and the computer program code are configured, with the at least one processor, to cause the apparatus at least to: acquire a message from a terminal device indicating communication quality below a determined threshold in a radio connection between a radio communication network infrastructure and the terminal device; detecting presence of an intentional radio interference source, wherein the detection is based on at least one measurement report received from the terminal device; and upon a result of said detection of the intentional radio interference source, causing transmission of a notification message to a determined target entity.

In an embodiment, the detection is based on analysing at least one metric derived from a signal strength of a downlink signal received by the terminal device wherein the at least one metric is comprised in the at least one measurement report received from the terminal device.

In an embodiment, the analysis comprises comparing the value of the at least one metric with a downlink signal quality reported by the terminal device and, upon determining that the at least one metric indicates downlink signal strength higher than what is proportional to the estimated path loss and transmission powers, determining that the terminal device is subject to the intentional radio interference.

In an embodiment, the at least one metric comprises at least one of the following: downlink signal quality, received signal strength, and path loss.

In an embodiment, the detection is based on analysing at least one metric derived from signal strengths of a plurality of downlink signals received by the terminal device from different base stations, wherein said at least one metric is comprised in the at least one measurement report received from the terminal device.

In an embodiment, the analysis comprises comparing said at least one metric with a determined threshold and determining, if a determined number of metrics exceed the determined threshold, that the terminal device is subject to the intentional radio interference.

In an embodiment, the terminal device is in a connected state with respect to the cellular communication network infrastructure at the time of launching the detection of the presence of the intentional radio interference source.

In an embodiment, said at least one measurement report comprises at least one measurement report received from the terminal device after launching the detection of the presence of the intentional radio interference source.

In an embodiment, the detection is based on analysis of measurement data history associated with the terminal device.

In an embodiment, the analysis of the measurement data history comprises searching for a rising edge in signal strength measurements and, upon detecting a rising edge, determining that the intentional radio interference source is present.

In an embodiment, the apparatus is further caused to, upon determining that the intentional radio interference source is present, determine a location of the terminal device and determining a context of the intentional radio interference on the basis of the determined location of the terminal device.

In an embodiment, the notification message triggers an alarm.

In an embodiment, the target entity comprises at least one of the following: an emergency centre, a security service entity, a public safety entity, and an insurance entity.

Some embodiments of the invention are defined in the dependent claims.

### List of drawings

Embodiments of the present invention are described below, by way of example only, with reference to the accompanying drawings, in which
Figure 1 illustrates a communication scenario to which embodiments of the invention may be applied;
Figure 2 illustrates a flow diagram of a process for detecting presence of intentional interference according to an embodiment of the invention;
Figure 3 illustrates a signalling diagram of a procedure executed in a network element according to an embodiment of the invention when a terminal device experiences poor channel quality;
Figure 4 illustrates a system and a notification message according to an embodiment of the invention;
Figures 5 to 8 illustrate embodiments of a jammer detection procedure according to some embodiments of the invention; and
Figure 9 illustrates an apparatus according to an embodiment of the invention.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

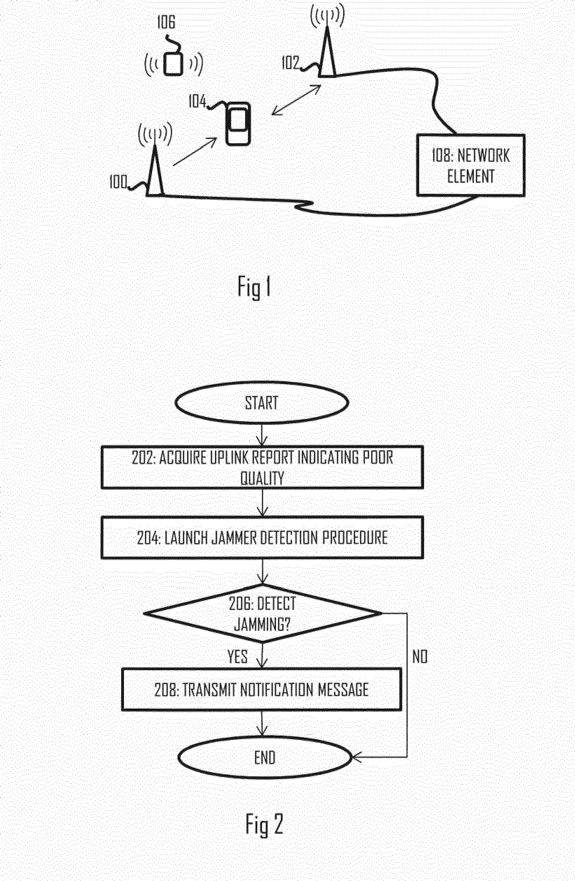

Figure 1 illustrates a wireless communication scenario to which embodiments of the invention may be applied. A terminal device 104 of a cellular communication system is located within a coverage area of the cellular communication system. The cellular communication system comprises a network infrastructure comprising a radio access network and, optionally, a core network. The radio access network comprises a plurality of base stations 100, 102 disposed to provide radio coverage within a service area of the cellular communication system. The service area may be divided into a plurality of cells. The terminal device 104 may communicate with one or more base stations 100, 102 over a radio connection, and the radio connection may be handed from one base station to another according to the mobility of the terminal device 104. The terminal device may periodically measure signal strengths associated with different neighbouring base stations in order to enable efficient (re)selection of a serving base station.

The terminal device 104 may operate in an idle mode in which it does not send or receive any data, and signalling with the bases stations is also reduced. The terminal device 104 may further operate in a connected mode in which it has established the radio connection with the base station, e.g. the base station 102, and transfer data with the base stations.

The cellular communication system may operate according to the specifications of a 2^{nd} generation cellular communication system such as Global System for Mobile communications, 3^{rd} generation cellular communication system such as Universal Mobile Telecommunication systems (UMTS) employing Wideband Code Division Multiple Access, or a 4^{th} generation cellular communication system such as Long-Term Evolution (LTE) or LTE-Advanced of the UMTS.

In addition to the radio signals transmitted by the terminal device 104 and the base stations 100, 102, a radio interference source 106 is present in the vicinity of the terminal device. The radio interference source 106 is a source of intentional radio interference, and it is disposed in order to hinder or even prevent the communications of the terminal device 104. Such radio jammers may be used in connection with illegal activities such as burglaries or carjacking. The reason for using the radio jammers is to prevent emergency calls.

An embodiment of the invention provides the network infrastructure of the cellular communication system to detect the presence of the intentional radio interference by using existing control signals employed in the radio communications between the terminal device 104 and the base station(s) 100, 102. As a consequence, no dedicated control signals are needed for the detection of the intentional radio interference, although such dedicated signalling may be used in some embodiments. Referring to Figure 2, let us describe a process for detecting the intentional radio interference by a network element 108 of the network infrastructure. The network element 108 may be disposed in one of the base stations 100, 102, or it may be disposed in another entity of the radio access network, e.g. in a base station controller or a radio access network controller, or it may be a separate network element.

Referring to Figure 2, the network element 108 acquires an uplink message from the terminal device 104 indicating poor quality in a radio connection between the terminal device 104 and the cellular communication network infrastructure (block 202). The poor quality may be defined such that the network element detects that the terminal device reports channel quality that is below a determined channel quality threshold which is considered to be poor or inadequate for reliable communication. In response to said uplink message, the network element 108 may launch a jammer detection procedure in order to detect presence of an intentional radio interference source within a coverage area of the cellular communication network infrastructure (block 204), wherein the detection is based on at least one measurement report received from the terminal device 104.

Upon determining as a result of said jammer detection procedure that the terminal device 104 is subject to the intentional radio interference or detection of the intentional radio interference source (block 206), the network element causes transmission of a notification message to a determined target entity (block 208).

In an embodiment, the target entity comprises at least one of the following: an emergency centre, a security service entity, a public safety entity, anti jamming function, jamming analysis function, O&M function, and an insurance entity.

Detection of the intentional radio interference in the network infrastructure provides an advantage that the radio interference may be detected in an element capable of conducting the emergency call or the alarm. In comparison, if the detection of the jamming is carried out in the terminal device, the terminal device may be in a situation in which it cannot send an alarm or emergency call even if it detects the presence of the jamming. As a consequence, the above-described embodiment provides an effective method for alarming the target entity of the intentional radio interference and appropriate countermeasures may be launched at an early phase.

In an embodiment, the network is configured to carry out the jammer detection procedure for terminal devices that are in the connected mode, e.g. have established a control channel connection with at least one base station of the cellular network infrastructure. In this embodiment, the jammer detection procedure may be disabled for the terminal devices that are not in the connected mode, e.g. for terminal devices that are in the idle mode.

In an embodiment, the uplink message is an uplink report indicating poor quality in a downlink connection. In another embodiment, the uplink message is a reference signal from which quality of an uplink connection may be determined.

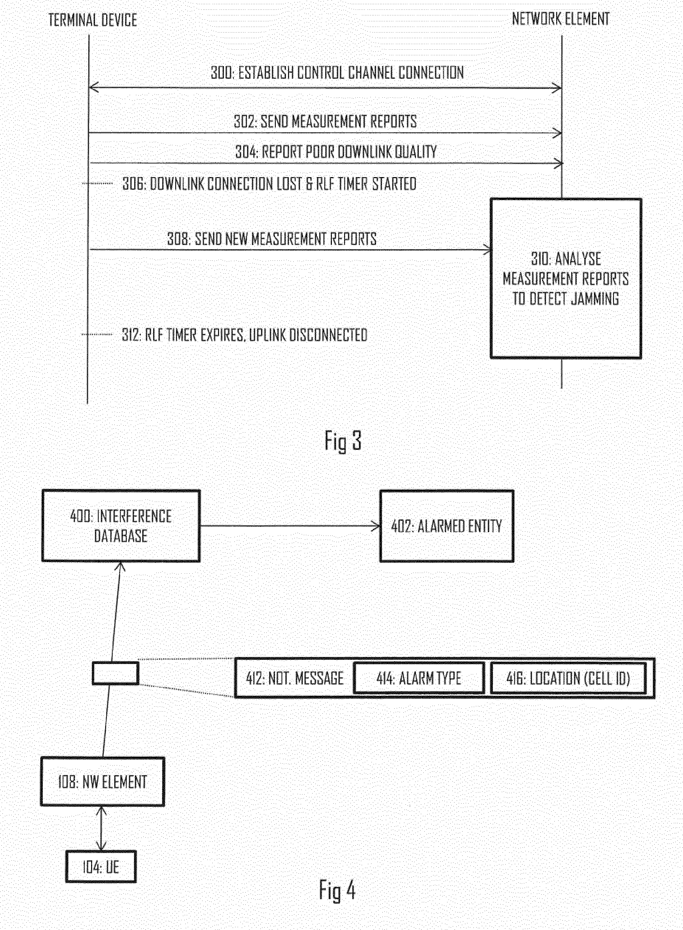

In an embodiment, the network element uses, in the jammer detection procedure, measurement reports received from the terminal device. Figure 3 illustrates a signalling diagram of an embodiment for launching and carrying out the jammer detection procedure. Referring to Figure 3, the terminal device establishes a control channel connection with the network element or with another element of the network infrastructure in step 300. In step 302, the terminal device sends measurement reports over the control channel connection. In step 304, the terminal device reports poor downlink quality in the control channel and/or data channel connection. The report may be comprised in the measurement reports, or it may be another report. The poor downlink quality may be reported by using existing channel quality indicators used for selecting a modulation and coding scheme, for example. Upon detecting the report of the poor downlink quality from the terminal device, the network element may start the jammer detection procedure. At some point before or after the report of the poor downlink quality, the downlink control channel connection with the terminal device may be lost (step 306). This may be detected upon receiving no acknowledgments or responses to downlink messages from the terminal device. In response to the detection of the lost downlink connection, a radio link failure (RLF) timer may be started. The lost connection may be re-established before expiry of the timer without the terminal device going to an idle mode. At the expiry of the RLF timer, the connection is deemed to have been disconnected and the terminal device enters the idle mode from the viewpoint of the network infrastructure.

While the RLF timer is counting, the terminal device may still send uplink measurement reports in step 308. The network element may use these measurement reports in the jammer detection procedure (block 310). Additionally or alternatively, the network element may use in block 310 measurement reports received before the downlink connection is lost or considered poor in quality. Embodiments of block 310 are described below. When the RLF time expires in block 312, an uplink connection with the terminal device may be disconnected, and the network element may not receive any further uplink measurement reports from the terminal device. Thereafter, the network element may use carry out the jammer detection procedure by using other means, e.g. previously received measurement reports and/or other measurements.

Figure 4 illustrates a block diagram of entities and interfaces according to an embodiment of the invention. Referring to Figure 4, the terminal device 104 and the network element 108 may have at least unidirectional communication route between them. The unidirectional route may be from the terminal device 104 to the network element 108 in order to enable the network element 108 to analyse the measurement reports in the jammer detection procedure. The system may further comprise an interference database 400 storing data related to the detected jamming events, e.g. time and location of detected jamming events. The interference database 400 may store any parameters of the detected jamming events, e.g. signal models of the detected interference. This type of information may then be used as reference data enabling the network element to identify the presence of the jamming. New interference models may be stored in the interference database, which provides the system with a self-learning property. A dedicated interface may be provided between the network element 108 and the interference database. Standardized message formats and contents may be transferred over this interface. As illustrated in Figure 4, the notification message 412 may comprise an information element 414 that indicates that the notification message notifies of the detection of the intentional interference. The notification message 412 may further comprise an information element 416 indicating the location of the detected intentional interference. The location may be indicated in the form of a cell identifier of a cell that served the terminal device when the interference was detected and/or when the terminal device reported the poor downlink quality. Alternatively, the location of the terminal device may be detected in a more accurate detail by using a satellite positioning system, triangular measurements, antenna beamforming techniques, etc., and the information element 416 may indicate the location of the terminal device 104 as determined coordinates. The interference database 400 may store the information contained in the received notification messages and determine whether or not to send an alarm signal to an alarmed entity 402. The connection between the interference database 400 and the alarmed entity 402 may be an internet protocol connection or any other state-of-the-art connection. In other embodiments, the network element 108 alarms the alarmed entity 402 by sending the notification message 412 to the alarmed entity 402.

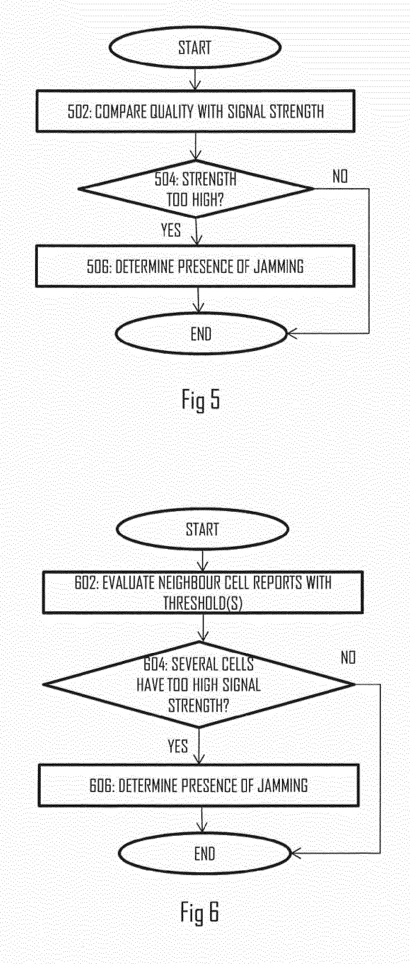

Let us now describe some embodiments for detecting the presence of the intentional interference in the jammer detection procedure with reference to Figures 5 to 7. In the embodiment of Figure 5, the network element compares signal quality with signal strength (block 502). In practice, the network element may compare a signal quality metric such as a channel quality indicator with a signal strength metric such as a path loss or a received signal strength indicator (RSSI). If the signal strength is determined in block 504 to be too high with respect to the signal quality as a result of the comparison, the network element may determine that the signal comprises intentional interference signals in block 506. On the other hand, if the signal strength corresponds with the signal quality within a determined tolerance range, the process may end, e.g. the network element may determine that no intentional interference was found or carry out another type of evaluation.

In an embodiment, the network element receives a channel quality indicator and a downlink signal strength metric (e.g. the path loss) from the terminal device and evaluates whether or not the downlink connection is interfered in the process of Figure 5. In an embodiment, the network element acquires an uplink channel quality indicator and an uplink signal strength metric that may be derived from one or more signals transmitted by the terminal device. Accordingly, the network element may evaluate whether or not the uplink connection is interfered in the process of Figure 5.

In an embodiment, the network compares uplink quality with downlink quality and/or uplink signal strength with downlink signal strength and determines, on the basis of this comparison whether or not one of the uplink and downlink is interfered with intentional interference. For example, if the uplink quality is higher than the downlink quality by a determined amount, the network element may determine that the downlink is being interfered. On the other hand, if the downlink quality is higher than the uplink quality by a determined amount, the network element may determine that the uplink is being interfered. If the uplink signal strength is higher than the downlink signal strength by a determined amount, the network element may determine that the uplink is being interfered. On the other hand, if the uplink signal strength is lower than the downlink signal strength by a determined amount, the network element may determine that the downlink is being interfered.

In an embodiment the network uses transmitter powers of base station and terminal device together with the received signal strengths of both uplink and downlink for comparing path losses in order to detect if the terminal is interfered.

Furthermore, if signal strengths of one of or both the uplink and downlink are above a maximum signal level threshold, the network element may determine that intentional interference is present. The maximum signal level threshold may be selected to be so high that a false alarm is not triggered in the presence of only signal(s) transmitted by the terminal device or the base station even when superimposed with unintentional interference from neighbouring cells etc. An appropriate level may be derived on the basis of measurements and testing.

The process of Figure 5 may be carried out for a radio connection between the terminal device and a base station serving the terminal device.

In the embodiment of Figure 6, the network element acquires neighbour cell measurement reports from the terminal device and evaluates a radio environment between the terminal device and a plurality of base stations in the vicinity of the terminal device. Thus, a more thorough picture of the radio environment may be achieved. Referring to Figure 6, the network element acquires the neighbour cell measurement reports comprising signal strength metrics representing a received signal strength associated with each reported base station or a path loss between the terminal device and each reported base station. In block 602, the network element compares the signal strength metric of each neighbouring base station with one or more interference detection threshold. If the signal strength metric exceeds the interference detection threshold, the network element may determine that the connection between the terminal device and that base station is interfered by an intentional interference. As described above in connection with the maximum signal level threshold, the interference detection threshold may be selected to be so high that a false alarm is not triggered in the presence of only signal(s) transmitted by the base station even when superimposed with unintentional interference from neighbouring cells etc. Block 602 may be carried out for each base station or cell reported by the terminal device. In block 604, the network element determines whether or not several base stations or cells are associated with a signal strength which is above the interference detection threshold. Block 604 may comprise comparing the number of cells or base stations determined to be interfered in block 602 with a triggering threshold. If the number of interfered cells or base stations exceeds the threshold, the network element may determine that the intentional interference is present (block 606). Otherwise, the process may end.

In an embodiment, the network element may compare the signal strengths of different cells or base stations with each other. If a plurality of cells or base stations are associated with approximately the same signal strength (within a determined tolerance), the network element may determine that the interference buries the signals transmitted by the base stations and that the intentional interference is present. This may enable the detection of broadband interference.

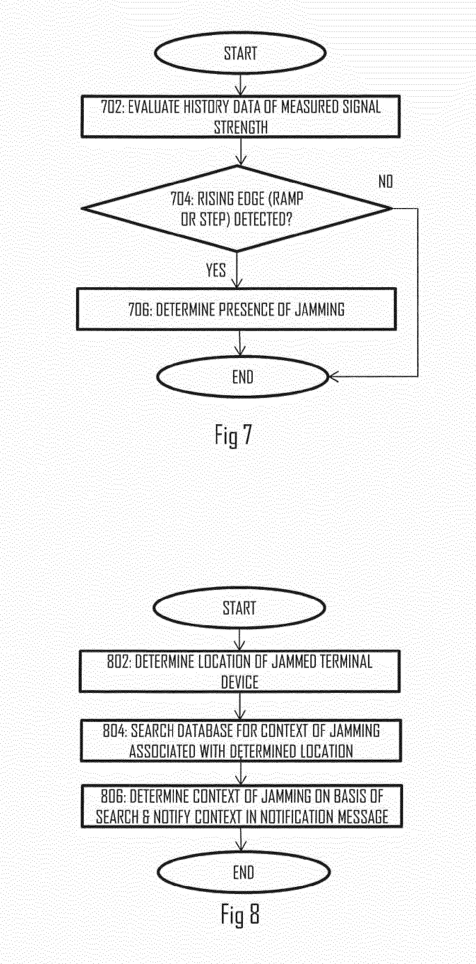

In the embodiment of Figure 7, the network element may evaluate measurement history stored in the network element or in another element of the network infrastructure (block 702). The measurement history may comprise measurement data acquired from the terminal device before the indication of the poor channel quality. The measurement data may comprise uplink and/or downlink signal strength metrics, and the network element may search for a rising edge in the signal strength metrics. The rising edge may indicate that the signal strength increases significantly, and this may be indication of a start of jamming. In block 704, the network element determines whether or not the rising edge is found in the measurement data. Detection parameters may be defined by a selected detection slope of the signal strength metric. The slope defines how rapidly and to which level the signal strength metric may rise in order to trigger the detection of the rising edge. If the signal strength metric is detected to rise with a higher slope than the detection slope, the network element may determine that the rising edge indicating the presence of the intentional interference has been detected (block 706). Otherwise, the process may end.

In an embodiment, the network element attempts to detect the context of the intentional interference upon detecting the presence of the intentional interference. Figure 8 illustrates such a process. Referring to Figure 8, the network element determines the location of the interfered terminal device in block 802. In an embodiment, the positioning comprises determining the latest serving cell of the terminal device or a serving cell when the terminal device reported poor channel quality. In another embodiment, other positioning means described above may be used to determine the location of the terminal device. In block 804, the network element searches a database for a context of jamming associated with the determined location of the terminal device. Different locations may be associated with different types of contexts, and the contextual parameters associated with the different location may be comprised in the interference database 400, for example. The database may be updated manually by an operator, e.g. when a mass event is arranged in a certain location. As a consequence, that location may be associated with the intentional interference such that the context of interference may be a possible threat to the mass event. Accordingly, individual temporary contexts may be stored in the database. Static contexts may naturally also be stored in the database. For example, a residential area may be associated with a context where the intentional interference is linked to a burglary. An isolated highway may be associated with a context where the intentional interference is linked to a carjacking.

As a consequence, on the basis of the detection of the intentional interference and the determined location of the terminal device, the network element may in block 806 determine the possible context of the intentional interference and send the notification signal to a target entity associated with the determined context, e.g. an emergency centre, a security service, etc.

In summary, a jamming situation may be detected in the network infrastructure as a signature from measurement report(s) even before the connection with the terminal device is lost. Indicators of the jamming may comprise: reported signal levels of serving cell and/or neighbour cell(s) are high and possibly approximately equal indicating use of broadband jammer; reception quality reported by the terminal device is poor or weak related to a signal level of a serving cell reported by the terminal device; earlier measurements may show a rapid trend from earlier non jammed situation (the rising edge).

Similar interference detection features may be implemented in the terminal device. A network infrastructure, e.g. the network element, may provide the terminal device with interference detection parameters enabling the terminal device to cope with different radio conditions. The parameters may be provided dynamically and/or at least some of the parameters may be static.

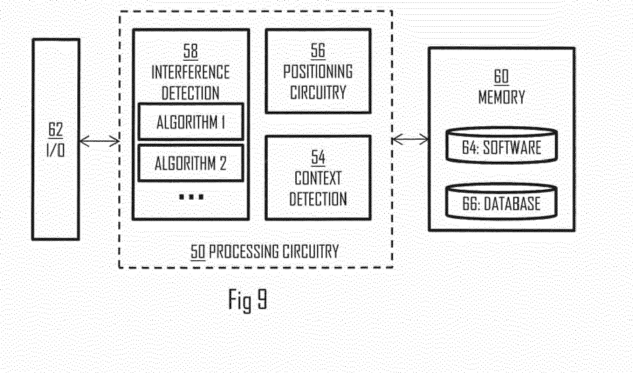

Figure 9 illustrates a block diagram of an apparatus according to an embodiment of the invention. The apparatus may be or may be comprised in the network element and configured to carry out the above-described functions of the network element. The apparatus may comprise at least one processor or a processing circuitry 50 and at least one memory 60 storing a computer program code 64. The computer program code 64 may define program instructions configuring the processing circuitry to carry out the embodiments of the invention. The processing circuitry 50 may comprise an interference detection circuitry 58 configured to carry out the above-described jammer detection procedure. The interference detection circuitry 58 may comprise a plurality of interference detection algorithms, e.g. one or more of the processes of Figures 5 to 7. The interference detection circuitry 58 may be activated upon reception of an input indicating that the terminal device has poor channel quality. As an output, the interference detection circuitry 58 may provide a signal indicating whether or not the intentional interference has been detected. If the interference detection circuitry has detected intentional interference, a positioning circuitry 56 may be activated. The positioning circuitry 56 may determine the location of the terminal device in the above-described manner, for example. Upon determining the location of the terminal device, a context detection circuitry 54 may be activated. The context detection circuitry 54 may be configured to determine the context of the intentional interference at the determined location, as described above. The circuitries 54 to 58 may use a database 66 stored in the memory 60. The database 66 may store the above-described parameters for detecting the presence of the intentional interference and/or the context of the intentional interference.

A result of one or more of the circuitries 54 to 58 may be output to the target entity in the notification message through an input/output (I/O) interface 62. The I/O interface 62 may provide a connection to other elements of the network infrastructure and, in some embodiments, to the terminal device. The I/O interface 62 may support one or more communication protocols comprising wired and/or wireless protocols. The I/O interface 62 may comprise circuitries and components necessary for providing the apparatus with communication capability. Such components may comprise modulation and/or coding circuitries, amplifiers, filters, frequency converters, etc.

As used in this application, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described in connection with Figures 2 to 8 may also be carried out in the form of a computer process defined by a computer program. The computer program may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The present invention is applicable to cellular or mobile communication systems defined above but also to other suitable communication systems. The protocols used, the specifications of such communication systems, their network elements and terminal devices, develop rapidly. Such development may require extra changes to the described embodiments. Therefore, all words and expressions should be interpreted broadly and they are intended to illustrate, not to restrict, the embodiment. It will be obvious to a person skilled in the art that, as technology advances, the inventive concept can be implemented in various ways. The invention and its embodiments are not limited to the examples described above but may vary within the scope of the claims.

## Claims

1. A method comprising in a radio communication network infrastructure:
acquiring (202) a message from a terminal device (104) indicating communication quality below a determined threshold in a radio connection between the radio communication network infrastructure and the terminal device;
detecting (204, 206), in response to said acquiring the message, presence of an intentional radio interference source (106), wherein the detection is based on at least one measurement report received from the terminal device; and
upon a result of said detection of the intentional radio interference source, causing (208) transmission of a notification message (412) to a determined target entity (402).

2. The method of claim 1, wherein the detection is based on analysing (502) at least one metric derived from a signal strength of a downlink signal received by the terminal device wherein the at least one metric is comprised in the at least one measurement report received from the terminal device.

3. The method of claim 2, wherein the analysis comprises comparing the value of the at least one metric with a downlink signal quality reported by the terminal device and, upon determining that the at least one metric indicates downlink signal strength higher than what is proportional to the estimated path loss and transmission powers, determining that the terminal device is subject to the intentional radio interference.

4. The method of claim 2 or 3, wherein the at least one metric comprises at least one of the following: downlink signal quality, received signal strength, and path loss.

5. The method of any preceding claim, wherein the detection is based on analysing (602) at least one metric derived from signal strengths of a plurality of downlink signals received by the terminal device from different base stations of the radio communication network infrastructure, wherein said at least one metric is comprised in the at least one measurement report received from the terminal device.

6. The method of claim 5, wherein the analysis comprises comparing said at least one metric with a determined threshold and determining, if a determined number of metrics exceed the determined threshold, that the terminal device is subject to the intentional radio interference.

7. The method of any preceding claim, wherein the terminal device is in a connected state with respect to the radio communication network infrastructure at the time of launching the detection of the presence of the intentional radio interference source.

8. The method of any preceding claim, wherein said at least one measurement report comprises at least one measurement report received from the terminal device after launching the detection of the presence of the intentional radio interference source.

9. The method of any preceding claim, wherein the detection is based on analysis (702) of measurement data history associated with the terminal device.

10. The method of claim 9, wherein the analysis of the measurement data history comprises searching (704) for a rising edge in signal strength measurements and, upon detecting a rising edge, determining (706) that the intentional radio interference source is present.

11. The method of any preceding claim, further comprising upon determining that the intentional radio interference source is present: determining (802) a location of the terminal device and determining (804, 806) a context of the intentional radio interference on the basis of the determined location of the terminal device.

12. The method of any preceding claim, wherein the notification message triggers an alarm.

13. The method of any preceding claim, wherein the target entity comprises at least one of the following: an emergency centre, a security service entity, a public safety entity, and an insurance entity.

14. An apparatus for a network element of a radio communication network infrastructure, the apparatus comprising means for carrying out all the steps of the method according to any preceding claim 1 to 13.

15. A computer program product embodied on a distribution medium readable by a computer and comprising program instructions which, when loaded into an apparatus for a network element of a radio communication network infrastructure, execute the method according to any preceding claim 1 to 13.

## Patentansprüche

1. Verfahren in einer Funkkommunikations-Netzinfrastruktur, umfassend:
Erhalten (202) einer Nachricht von einem Endgerät (104), die eine Kommunikationsqualität unter einem festgelegten Schwellwert auf einer Funkverbindung zwischen der Funkkommunikations-Netzinfrastruktur und dem Endgerät anzeigt;
Erkennen (204, 206), in Reaktion auf das Erhalten der Nachricht, des Vorhandenseins einer Quelle beabsichtigter Funkstörung (106), wobei die Erkennung auf wenigstens einem Messbericht basiert, der von dem Endgerät empfangen wurde; und
auf ein Ergebnis der Erkennung der Quelle beabsichtigter Funkstörungen hin, Veranlassen (208) des Sendens einer Benachrichtigung (412) an eine bestimmte Zielentität (402) .

2. Verfahren nach Anspruch 1, wobei die Erkennung darauf basiert, wenigstens eine Metrik zu analysieren (502), die aus einer Signalstärke eines vom Endgerät empfangenen Abwärtsstreckensignals abgeleitet ist, wobei die wenigstens eine Metrik in dem wenigstens einen Messbericht enthalten ist, der vom Endgerät empfangen wurde.

3. Verfahren nach Anspruch 2, wobei die Analyse umfasst, den Wert der wenigstens einen Metrik mit einer Abwärtsstreckensignalgüte zu vergleichen, die von dem Endgerät gemeldet wird, und, auf das Bestimmen hin, dass die wenigstens eine Metrik eine höhere Abwärtsstreckensignalstärke anzeigt, als im Verhältnis zum Pfadverlust und den Sendeleistungen steht, Bestimmen, dass das Endgerät der beabsichtigten Funkstörung ausgesetzt ist.

4. Verfahren nach Anspruch 2 oder 3, wobei die wenigstens eine Metrik wenigstens eines der Folgenden umfasst: Abwärtsstreckensignalgüte, Empfangssignalstärke und Pfadverlust.

5. Verfahren nach einem der vorstehenden Ansprüche, wobei die Erkennung darauf basiert, wenigstens eine Metrik zu analysieren (602), die aus Signalstärken mehrerer vom Endgerät empfangener Abwärtsstreckensignale von verschiedenen Basisstationen der Funkkommunikations-Netzinfrastruktur abgeleitet ist, wobei die wenigstens eine Metrik in dem wenigstens einen Messbericht enthalten ist, der vom Endgerät empfangen wurde.

6. Verfahren nach Anspruch 5, wobei die Analyse umfasst, die wenigstens eine Metrik mit einem bestimmten Schwellwert zu vergleichen und, falls eine bestimmte Anzahl von Metriken den bestimmten Schwellwert übersteigen, zu bestimmen, dass das Endgerät beabsichtigter Funkstörung ausgesetzt ist.

7. Verfahren nach einem der vorstehenden Ansprüche, wobei das Endgerät bezogen auf die Funkkommunikations-Netzinfrastruktur zum Zeitpunkt der Veranlassung der Erkennung des Vorhandenseins der Quelle beabsichtigter Funkstörung in einem verbundenen Zustand ist.

8. Verfahren nach einem der vorstehenden Ansprüche, wobei der wenigstens eine Messbericht wenigstens einen Messbericht umfasst, der von dem Endgerät empfangen wird, nachdem die Erkennung des Vorhandenseins der Quelle beabsichtigter Funkstörung veranlasst wurde.

9. Verfahren nach einem der vorstehenden Ansprüche, wobei die Erkennung auf einer Analyse (702) der Messdatenhistorie zu dem betreffenden Endgerät basiert.

10. Verfahren nach Anspruch 9, wobei die Analyse der Messdatenhistorie umfasst, nach einer ansteigenden Flanke in Signalstärkemessungen zu suchen (704) und, auf die Erkennung einer ansteigenden Flanke hin, zu bestimmen (706), dass eine Quelle beabsichtigter Funkstörung vorhanden ist.

11. Verfahren nach einem der vorstehenden Ansprüche, ferner umfassend, auf das Erkennen hin, dass eine Quelle beabsichtigter Funkstörung vorhanden ist: Bestimmen (802) eines Standorts des Endgeräts und Bestimmen (804, 806) eines Kontexts der beabsichtigten Funkstörung auf Basis des bestimmten Standorts des Endgeräts.

12. Verfahren nach einem der vorstehenden Ansprüche, wobei die Benachrichtigung einen Alarm auslöst.

13. Verfahren nach einem der vorstehenden Ansprüche, wobei die Zielentität wenigstens eines der Folgenden umfasst: eine Notrufzentrale, eine Sicherheitsdienstentität, eine Entität der öffentlichen Sicherheit und eine Versicherungsentität.

14. Vorrichtung für ein Netzelement einer Funkkommunikations-Netzinfrastruktur, wobei die Vorrichtung Mittel zum Ausführen aller Schritte des Verfahrens gemäß einem der vorstehenden Ansprüche 1 bis 13 umfasst.

15. Computerprogrammprodukt, das auf einem computerlesbaren Verteilmedium ausgeführt ist und Programmanweisungen umfasst, welches, wenn es in eine Vorrichtung für ein Netzelement einer Funkkommunikations-Netzinfrastruktur geladen wird, das Verfahren gemäß einem der vorstehenden Ansprüche 1 bis 13 ausführt.

## Revendications

1. Un procédé comprenant dans une infrastructure de réseau de communication radio :
l'acquisition (202) d'un message provenant d'un dispositif terminal (104) indiquant une qualité de communication sous un seuil déterminé dans une connexion radio entre l'infrastructure de réseau de communication radio et le dispositif terminal,
la détection (204, 206), en réponse à ladite acquisition de message, d'une présence d'une source de brouillage radio intentionnel (106), la détection étant basée sur au moins un rapport de mesures reçu à partir du dispositif terminal, et
après un résultat de ladite détection de la source de brouillage radio intentionnel, l'étape consistant à amener (208) la transmission d'un message de notification (412) vers une entité cible déterminée (402).

2. Le procédé selon la revendication 1, dans lequel la détection est basée sur une analyse (502) d'au moins une mesure dérivée d'une puissance de signal d'un signal en liaison descendante reçu par le dispositif terminal, la au moins une mesure étant contenue dans le au moins un rapport de mesures reçu du dispositif terminal.

3. Le procédé selon la revendication 2, dans lequel l'analyse comprend la comparaison de la valeur de la au moins une mesure à une qualité de signal en liaison descendante indiquée par le dispositif terminal et, après la détermination que la au moins une mesure indique une puissance de signal en liaison descendante supérieure à une mesure proportionnelle à l'affaiblissement sur le trajet estimé et aux puissances de transmission, la détermination que le dispositif terminal est soumis au brouillage radio intentionnel.

4. Le procédé selon la revendication 2 ou 3, dans lequel la au moins une mesure comprend au moins une des mesures suivantes : qualité de signal en liaison descendante, puissance de signal reçue et affaiblissement sur le trajet.

5. Le procédé selon l'une quelconque des revendications précédentes, dans lequel la détection est basée sur l'analyse (602) d'au moins une mesure dérivée de puissances de signal d'une pluralité de signaux en liaison descendante reçus par le dispositif terminal à partir de stations de base différentes de l'infrastructure de réseau de communication radio, ladite au moins une mesure étant contenue dans le au moins un rapport de mesures reçu du dispositif terminal.

6. Le procédé selon la revendication 5, dans lequel l'analyse comprend la comparaison de ladite au moins une mesure à un seuil déterminé et la détermination, si un nombre de mesures déterminé dépasse le seuil déterminé, que le dispositif terminal est soumis au brouillage radio intentionnel.

7. Le procédé selon l'une quelconque des revendications précédentes, dans lequel le dispositif terminal est dans un état connecté par rapport à l'infrastructure de réseau de communication radio à l'instant du lancement de la détection de la présence de la source de brouillage radio intentionnel.

8. Le procédé selon l'une quelconque des revendications précédentes, dans lequel ledit au moins un rapport de mesures comprend au moins un rapport de mesures reçu du dispositif terminal après le lancement de la détection de la présence de la source de brouillage radio intentionnel.

9. Le procédé selon l'une quelconque des revendications précédentes, dans lequel la détection est basée sur l'analyse (702) d'un historique de données de mesure associé au dispositif terminal.

10. Le procédé selon la revendication 9, dans lequel l'analyse de l'historique de données de mesure comprend la recherche (704) d'un front montant dans les mesures de puissance de signal et, en cas de détection d'un front montant, la détermination (706) que la source de brouillage radio intentionnel est présente.

11. Le procédé selon l'une quelconque des revendications précédentes, comprenant en outre, après la détermination que la source de brouillage radio intentionnel est présente : la détermination (802) d'un emplacement du dispositif terminal et la détermination (804, 806) d'un contexte du brouillage radio intentionnel en fonction de l'emplacement déterminé du dispositif terminal.

12. Le procédé selon l'une quelconque des revendications précédentes, dans lequel le message de notification déclenche une alarme.

13. Le procédé selon l'une quelconque des revendications précédentes, dans lequel l'entité cible comprend au moins une des entités suivantes : un centre d'urgence, une entité de service de sécurité, une entité de sécurité publique et une entité d'assurance.

14. Un appareil pour un élément de réseau d'une infrastructure de réseau de communication radio, l'appareil comprenant un moyen d'exécution de toutes les étapes du procédé selon l'une quelconque des revendications précédentes 1 à 13.

15. Un produit de programme informatique incorporé dans un support de distribution lisible par un ordinateur et comprenant des instructions de programme qui, lorsqu'elles sont chargées dans un appareil pour un élément de réseau d'une infrastructure de réseau de communication radio, exécutent le procédé selon l'une quelconque des revendications précédentes 1 à 13.
